Europäisches Patentamt

European Patent Office

Office européen des brevets

(19)

(11) Publication number: **0 078 116**
**B1**

# (12) EUROPEAN PATENT SPECIFICATION

(45) Date of publication of patent specification: **22.01.86**

(51) Int. Cl.⁴: **F 16 D 25/10**

(21) Application number: **82305326.9**

(22) Date of filing: **07.10.82**

(54) **Dual plate friction clutch.**

(30) Priority: **28.10.81 GB 8132426**

(43) Date of publication of application:
**04.05.83 Bulletin 83/18**

(45) Publication of the grant of the patent:
**22.01.86 Bulletin 86/04**

(84) Designated Contracting States:
**DE FR**

(56) References cited:
**FR-A-2 028 078**
**GB-A- 457 908**
**GB-A- 594 950**
**GB-A- 704 716**
**GB-A- 798 559**
**GB-A- 900 712**
**GB-A-1 139 221**
**US-A-3 669 233**
**US-A-3 760 918**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Burke, John Pius**
**27 Acacia Road**
**Leamington Spa Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

# Description

This invention relates to fluid actuated dual plate friction clutches particularly though not exclusively for use in motor vehicle automatic transmissions. Such clutches provide two separately engageable output drives from a single input drive.

In motor vehicle transmissions it is important that components be as small as possible for maximum space utilisation. It is also desirable that wearing components, such as those having friction material facings, are renewable without major dismantling of the transmission.

British Patent Specification GB—A—594 950 discloses a compact dual plate clutch arrangement having two facing hydraulic cylinders and a single interposed reaction member; one cylinder being provided in a drive member and the other being provided in a cover member fixed for rotation with the drive member, the reaction member being clamped between the drive and cover members. Pressure plates are inserted between the pistons of the respective cylinder and a respective driven plate, the plates being driven and guided for movement axially of the clutch by lugs engaged in slots of the reaction member. Opening into the cylinder in the drive member is/ are one or more fluid ducts for the passage of fluid under pressure from one side of the clutch to the other, the configuration of the or each duct being complicated due to bends therein in the drive and cover members so the duct can extend through the reaction member by skirting an aforementioned slot.

The lugs and slots of the prior art construction are difficult and expensive to manufacture to the required standard. Also it is difficult and expensive to form the bends in a said duct and to ensure that open ends of duct portions in the drive and cover members coincide with open ends of the duct portion in the reaction member-so there is free flow of fluid.

The present invention provides improved means for driving and guiding the pressure plates in the clutch, and also provides convenient means for supplying fluid under pressure from one side of the clutch to the other.

According to the present invention there is provided a dual plate friction clutch comprising a drive member, a cover member fixed for rotation with the drive member, two facing hydraulic cylinders provided one each in said drive and cover members, an annular reaction member extending between the cylinders and fixed for rotation with the drive member, two driven members interposed one each between the reaction member and a respective hydraulic cylinder, and two pressure plates fixed for rotation with the drive member and interposed one each between a respective driven member and hydraulic cylinder, characterised in that a plurality of guide pins are provided between said drive and cover members, the guide pins pass through apertures of the pressure plates to both hold the pressure plates for rotation with the drive member and guide the pressure plates for movement axially of the clutch, and one or more of the guide pins is hollow and comprises part of a fluid feed duct to one of said hydraulic cylinders.

Such an arrangement reduces the need for accurate machining between component parts of the clutch to define the feed duct.

Also the pins eliminate the need for lugs and slots or splines or keyways which have been used hitherto to locate and guide the pressure plates in the drive member.

Cylindrical pins may be used; the corresponding apertures are drilled in the drive and cover members and pressure plates on an indexing machine tool. Relatively expensive milling of slots or splines for the pressure plates is eliminated.

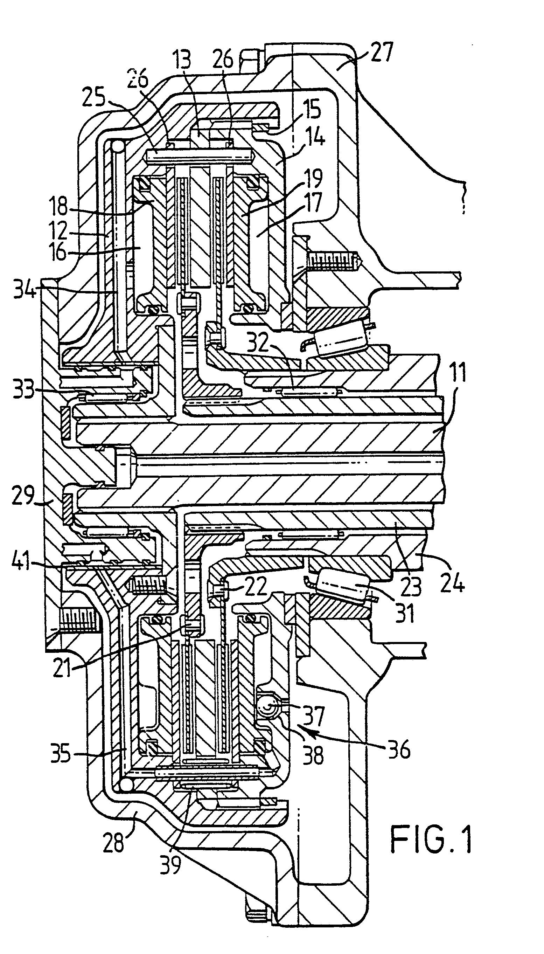

Other features of the invention are disclosed in the following description of a preferred embodiment shown, by way of example only, in the accompanying drawing which is an axial section through a dual plate clutch according to the invention.

With reference to the drawing there is shown a dual wet plate clutch for use in a motor vehicle transmission. An input shaft 11 has a generally bowl shaped clutch drive member 12 splined thereto. The outer wall of the drive member 12 is internally splined to receive a reaction plate 13 and a cover 14 which are retained against relative movement by a circlip 15. No relative axial movement between the drive member 12, reaction plate 13 and cover 14 is permitted and the splines need to be sufficiently accurately machined only to hold the members together against relative rotation. Alternative means, such as bolts could be used to retain the members together. Both the drive member 12 and cover 14 define hydraulic cylinder 16, 17 having facing pistons 18, 19. Clutch drive plates 21, 22 are disposed respectively between the pistons 18, 19 and the reaction plate 13. The drive plates 21, 22 are splined to respective output shafts 23, 24 co-axial about the input shaft 11.

A plurality of cylindrical pins 25 retained in cooperating bores of the drive member 12 and cover 14 support supplementary pressure plates 26 between each piston and its respective driven plate.

Each plate 26 is axially movable on the pins 25 to clamp the respective driven plate on outward movement of the appropriate piston. The pistons 18, 19 are preferably die cast in aluminium for accuracy and low weight whereas the plates 13 and 26 are of steel to provide uniform friction properties and low wear rate.

The transmission housing 27 and end covers 28, 29 enclose the clutch, bearings 31—33 supporting the shafts for rotation.

Each hydraulic cylinder 16, 17 has a respective fluid feed duct 34, 35 from the end cover 29 which serves as a manifold. One or more of the pins 25 is hollow so the duct for cylinder 17 passes conveniently through such hollow pin(s). The cylinders each have a centrifugal relief valve 36 (only that for cylinder 17 shown) to prevent partial engagement of a driven plate due to centrifugal build up of pressure in the cylinders. The valves comprise a ball 37 and tapered seat 38. Under pressure the ball is forced against its seat to close the valve, centrifugal force otherwise urging the ball up the taper of its seat to open the valve as shown.

Several of the pins 25 may retain light coiled compression springs 39 which act between the pressure plates 26 to return the pistons 18, 19. The springs 39 are equispaced about the axis of the clutch.

A sleeve 41 is pressed into the drive member 12, which may be of aluminium, to serve as a bearing member for the end cap 29.

Engagement of either clutch is effected by pressurisation of the appropriate cylinder to clamp the respective driven plate, the clutches are independently operable.

Removal of either clutch plate is effected by removal of the end covers 28, 29 and withdrawal of the clutch assembly from shafts 11, 23 and 24. The clutch assembly may then be dismantled for inspection and replacement of plates 21 and 22 by removal of the circlip 15.

## Claims

1. A dual plate friction clutch comprising a drive member (12), a cover member (14) fixed for rotation with the drive member (12), two facing hydraulic cylinders (16, 17) provided one each in said drive and cover members, an annular reaction member (13) extending between the cylinders (16, 17) and fixed for rotation with the drive member (12), two driven members (21, 22) interposed one each between the reaction member (13) and a respective hydraulic cylinder, and two pressure plates (26) fixed for rotation with the drive member (12) and interposed one each between a respective driven member and hydraulic cylinder, characterised in that a plurality of guide pins (25) are provided between said drive and cover members, the guide pins pass through apertures of the pressure plates (26) to both hold the pressure plates for rotation with the drive member and guide the pressure plates for movement axially of the clutch, and one or more of the guide pins (25) is hollow and comprises part of a fluid feed duct to one of said hydraulic cylinders.

2. A clutch according to Claim 1, characterised in that the pressure plates (26) are urged apart by a plurality of equispaced coiled compression springs (39) located on the guide pins (25).

## Patentansprüche

1. Zweiplatten-Reibungskupplung mit einem treibenden Teil (12), einem Deckelteil (14), das mit dem treibenden Teil (12) drehfest verbunden ist, zwei einander zugekehrten Hydraulikzylindern (16, 17), von denen der eine in dem treibenden Teil und der andere in dem Deckelteil vorgesehen ist, einem ringförmigen Reaktionsteil (13), das sich zwischen den Zylindern (16, 17) erstreckt und mit dem treibenden Teil (12) drehfest verbunden ist, zwei getriebenenen Teilen (21, 22), von denen jedes zwischen dem Reaktionsteil (13) und einem zugehörigen Hydraulikzylinder angeordnet ist, und zwei Druckplatten (26), die mit dem treibenden Teil (12) drehfest verbunden sind un von denen jede zwischen einem zugehörigen getriebenen Teil und Hydraulikzylinder angeordnet ist, dadurch gekennzeichnet, daß mehrere Führungsstifte (25) zwischen dem treibenden Teil und dem Deckelteil vorgesehen sind, wobei die Führungsstifte durch Öffnungen der Druckplatten (26) gehen, um die Druckplatten zur Drehung mit dem treibenden Teil zu halten und die Druckplatten für eine Axialbewegung bezüglich der Kupplung zu führen, und einer oder mehrere der Führungsstifte (25) hohl ist bzw. sind und einen Teil eines Fluidzuführungskanals zu einem der Hydraulikzylinder aufweist bzw. aufweisen.

2. Kupplung nach Anspruch 1, dadurch gekennzeichnet, daß die Druckplatten (26) durch eine Anzahl von gleich beabstandeten Schraubendruckfedern (39), die an den Führungsstiften (25) angeordnet sind, auseinander gedrängt werden.

## Revendications

1. Embrayage à friction à deux disques, comprenant un élément menant (12), un couvercle (14) fixé solidairement à rotation avec l'élément menant (12), deux cylindres hydrauliques (16, 17) opposés face à face prévus, l'un dans l'élément menant et l'autre dans le couvercle, un élément de réaction annulaire (13) qui s'étend entre les cylindres (16, 17) et fixé solidairement à rotation à l'élément menant (12), deux éléments entraînés (21, 22) dont chacun est interposé entre l'élément de réaction (13) et un cylindre hydraulique respectif, et deux plateaux de pression (26) fixés solidairement à rotation avec l'élément menant (12) et dont chacun est interposé entre l'élément entraîné respectif et le cylindre hydraulique correspondant, caractérisé en ce qu'il est prévu une pluralité de broches de guidage (25) entre ledit élément menant et ledit couvercle, les broches de guidage traversent des ouvertures, prévues dans les plateaux de pression (26), à la fois pour retenir les plateaux de pression solidaires à rotation de l'élément menant et pour guider les plateaux de pression dans leur déplacement dans la direction axiale de l'embrayage, et au moins une des broches de guidage (25) est creuse et constitue une partie d'un conduit d'alimentation en fluide aboutissant à l'un desdits cylindres hydrauliques.

2. Embrayage selon la revendication 1, caractérisé en ce que les plateaux de pression (26) sont sollicités à s'écarter l'un de l'autre par une pluralité de ressorts de compression hélicoïdaux (39) uniformément espacés montés sur les broches de guidage (25).

FIG.1